Europäisches Patentamt

European Patent Office

Office européen des brevets

(19)

(11) Numéro de publication: **0 130 095 B1**

(12) **FASCICULE DE BREVET EUROPEEN**

(45) Date de publication du fascicule du brevet:
09.03.88

(51) Int. Cl.⁴: **G 01 T 1/164**

(21) Numéro de dépôt: **84401022.3**

(22) Date de dépôt: **18.05.84**

(54) **Procédé de traitement des impulsions délivrées par une gamma caméra et gamma caméra mettant en oeuvre ce procédé.**

(30) Priorité: **27.05.83 FR 8308824**

(43) Date de publication de la demande:
**02.01.85 Bulletin 85/1**

(45) Mention de la délivrance du brevet:
**09.03.88 Bulletin 88/10**

(84) Etats contractants désignés:
**DE NL**

(56) Documents cités:
**FR - A - 2 292 986**
**US - A - 3 914 611**
**US - A - 3 950 648**
**US - A - 4 058 728**

**IEEE TRANSACTIONS NUCLEAR SCIENCE, volume NS-17, février 1970 (NEW YORK, US) L.O. JOHNSON et al.: "A direct-coupled gamma-ray spectrometer for high counting rates", pages 276-284**

(73) Titulaire: **SOPHA MEDICAL Société Nouvelle Informatek,, Z.A. de Courtaboeuf Avenue de Scandinavie, 91940 - Les Ulis (FR)**

(72) Inventeur: **Mestais, Corinne, THOMSON-CSF SCPI 173, bld Haussmann, F-75379 Paris Cedex 08 (FR)**
Inventeur: **Gauthier, René, THOMSON-CSF SCPI 173, bld Haussmann, F-75379 Paris Cedex 08 (FR)**
Inventeur: **Roux, Georges, THOMSON-CSF SCPI 173, bld Haussmann, F-75379 Paris Cedex 08 (FR)**

(74) Mandataire: **Grynwald, Albert et al, THOMSON-CSF SCPI 19, avenue de Messine, F-75008 Paris (FR)**

## Description

L'invention concerne un procédé de traitement des impulsions délivrées par une gamma-caméra et une gamma-caméra mettant en oeuvre ce procédé. Elle se rapporte aux caméras à scintillation, ou gamma-caméra, de type ANGER dont le brevet américain 3.011.037 décrit le fonctionnement dans ses principes et ses moyens de réalisation. Ces gamma-caméras sont destinées à détecter et à visualiser des photons émis par des corps radioactifs.

Les gamma-caméras sont utilisées en médecine nucléaire pour visualiser dans un organe la répartition de molécules marquées par un isotope radioactif que l'on a injecté à un patient. Une gamma-caméra comprend généralement un collimateur pour focaliser les photons gamma émis par le patient, un cristal scintillateur pour transformer les photons gamma en photons lumineux ou scintillations, et un réseau de tubes photomultiplicateurs qui transforment chacun les scintillations en impulsions électriques dites contributions électriques de tubes. Il comprend en outre des circuits électroniques pour produire, à partir des contributions électriques fournies par les tubes photomultiplicateurs, des signaux de coordonnées X et Y du lieu où s'est produit la scintillation ainsi qu'un signal de validation Z quand l'énergie W de la scintillation appartient à une bande d'énergie prédéterminée.

Cette chaîne de détection est suivie d'un ensemble de visualisation comportant généralement un oscilloscope cathodique commandé par les signaux de coordonnées X, Y, et par Z pour visualiser par un point lumineux sur l'écran le point d'impact du photon gamma sur le cristal. L'ensemble de visualisation peut éventuellement comporter un dispositif photographique pour former ainsi une image de l'organe observé en intégrant un grand nombre de points lumineux produits sur l'écran cathodique. Il peut par ailleurs comprendre un dispositif de traitement numérique des images.

Entre autres qualités une gamma-caméra doit posséder une bonne résolution spatiale c'est-à-dire la capacité de distinguer des petites sources radioactives rapprochées, une bonne réponse en taux de comptage c'est-à-dire la capacité de traiter un grand nombre d'évènements par unité de temps et une qualité d'image indépendante de l'énergie de l'isotope considéré. La résolution spatiale dépend de la précision du calcul des coordonnées X et Y. La qualité de l'élaboration de ces coordonnées dépend essentiellement des lois physiques régissant le fonctionnement des différentes parties de la gamma-caméra. Ainsi, l'interaction d'un photon gamma avec le cristal donne naissance à une scintillation lumineuse dont l'intensité décroît exponentiellement avec le temps. La constante de temps de cette décroissance est caractéristique du cristal scintillateur utilisé, pour un cristal d'iodure de sodium activé au thallium, NaI(Tl), elle est de l'ordre de 250 nanosecondes. Cette scintillation est vue par plusieurs tubes photomultiplicateurs simultanément. Les photons lumineux composant cette scintillation arrachent des photoélectrons aux photocathodes des tubes photomultiplicateurs; le nombre de photoélectrons ainsi arrachés obéit, pour une scintillation donnée, à la loi statistique de Poisson. Ceci signifie que la contribution électrique d'un tube photomultiplicateur recevant une scintillation a une amplitude dont la valeur suit une distribution statistique de Poisson et dont la valeur moyenne est fonction de l'énergie des photons lumineux incidents.

Comme la scintillation est vue par plusieurs tubes photomultiplicateurs simultanément la détermination de l'emplacement de cette scintillation sur le cristal, elle-même représentative du lieu d'émission du photon gamma d'excitation, est obtenue en calculant l'emplacement du barycentre des contributions électriques délivrées par l'ensemble des tubes photomultiplicateurs excités par cette scintillation. Ce calcul s'effectue simplement, selon Anger, en injectant ces contributions à travers un jeu de matrices de résistances. Les valeurs de ces résistances sont fonction des positions des tubes photomultiplicateurs auxquels elles sont raccordées. Les positions de ces tubes sont repérées par rapport à des axes cartésiens de référence dont le point d'intersection est généralement situé au centre du réseau de tubes.

Le problème le plus difficile à résoudre consiste, pour une scintillation donnée, à déterminer le plus exactement possible la valeur moyenne des amplitudes de chacune des contributions. Il est connu d'intégrer dans le temps ces contributions sur une période de l'ordre de la constante de temps de décroissance des scintillations du cristal scintillateur. Typiquement la durée de cette intégration est de l'ordre de trois fois la constante de temps. La durée d'intégration ou durée de comptage, est une conséquence directe de la statistique de Poisson. En effet l'écart type de la fluctuation de l'amplitude des contributions selon la statistique de Poisson est inversement proportionnelle à la racine carrée du nombre de photo-électrons arrachés. Ainsi, plus l'intégration est longue, plus de nombre de photo-électrons pris en compte est important, et plus l'écart type est faible et donc plus la valeur moyenne de cette contribution est appréciée avec exactitude.

En fait, l'opération de calcul de l'emplacement du barycentre étant une opération linéaire il est plus économique de réaliser cette intégration à la sortie de chacune des matrices de résistances du jeu de matrices. En effet, ces matrices n'effectuent qu'une pondération de ces contributions en fonction de l'emplacement des tubes sur le cristal. Les impulsions électriques délivrées en sortie du jeu de matrices de résistances sont dites impulsions pondérées. On notera au passage que la durée de comptage est directement liée à la qualité de la résolution spatiale de la gamma-caméra mais que cette qualité s'obtient au détriment du taux de comptage, c'est-à-dire au détriment du nombre d'évènements par seconde pris en compte.

Cette opération d'intégration ne vas pas sans quelques difficultés. La principale de celles-ci réside dans la présence de tensions continues permanentes venant se superposer aux impulsions pondérées délivrées par les matrices et qui, introduites dans des intégrateurs, faussent d'autant plus la valeur du signal délivré par ceux-ci que la durée d'intégration est longue. L'origine de ces tensions continues est principalement le fait d'amplificateurs à gain variable interposés entre chaque matrice de résistance et un intégrateur correspondant. Ces amplificateurs à gain variable sont utilisés pour deux raisons: premièrement ils servent à choisir la gamme d'énergie à étudier et, deuxièmement ils effectuent une adaptation d'amplitude des impulsions pondérées à la dynamique de fonctionnement des intégrateurs utilisés. On verra que ces tensions continues à éliminer peuvent avoir d'autres origines notamment celle résultant d'un effet dit d'empilement des scintillations.

Le potentiel électrique, appliqué par ces tensions continues, décale ce qu'on appelle communément le potentiel de base des intégrateurs. Le brevet américaine 3.984.689 publié le 5 Octobre 1976 de Roger F. Arseneau indique qu'aux niveaux élevés de radioactivité, c'est-à-dire à des taux de comptage élevés par exemple superieur à 100.000 évènements par seconde, des couplages capacitifs auxquels on aurait pu penser de prime abord pour éliminer ces tensions continues, sont à proscrire. En effet, la présence de telles couplages provoquent un décalage du potentiel de base lié essentiellement à l'apparition répétée et très rapide des scintillations. Ces couplages ont pour résultat en effet de reconstituer une composante continue dépendant justement du taux de comptage. Cependant, les précisions demandées actuellement sur le calcul des signaux de coordonnées nécessitent que les variations erratiques d'amplitude de ces signaux restent inférieures au pour mille de leur amplitude. Si la solution proposée dans ce brevet américain est théoriquement la meilleure, pratiquement elle n'est plus applicable à cause des dérives incontrôlables des tensions continues des divers éléments de la chaîne électronique, comme les auteurs de la présente invention ont pu le constater.

La présente invention propose de résoudre les inconvénients déjà cités créés par l'introduction d'un couplage capacitif dans cette chaîne tout en restaurant le potentiel de base avant l'apparition d'une impulsion pondérée à prendre en compte.

L'invention concerne un procédé de traitement des impulsions délivrées par une gamma-caméra dans laquelle

- des scintillations produites sous l'effet d'un rayonnement gamma dans un cristal scintillateur sont détectées et amplifiées par un réseau de tubes photomultiplicateur.
- puis pondérées dans des matrices de résistances pour produire lesdites impulsions

- et dont la mesure est obtenue par intégration par rapport à un potentiel de base,
- caractérisé en ce que lesdites impulsions sont transmises par liaison capacitive et en ce que l'on n'autorise cette mesure qu'après la fin d'une période où il y a eu absence d'impulsions, et en ce que l'on restaure le potentiel de base avant une nouvelle intégration pendant la fin de cette dite période.

L'invention a également pour objet une gamma-caméra pour la mise en oeuvre du procédé ci-dessus, munie d'un dispositif de traitement des impulsions comportant, un collimateur pour collimater sur un cristal scintillateur un rayonnement gamma à mesurer, un réseau de tubes photomultiplicateurs pour détecter les scintillations émises par le scintillateur et pour amplifier les contributions électriques résultant de cette détection, un jeu de matrices de résistances pour pondérer et sommer les contributions électriques et produire ainsi des impulsions pondérées, et un étage d'intégrateurs pour mesurer par rapport à un potentiel de base les impulsions pondérées, caractérisée en ce que les impulsions pondérées sont appliquées auxdits intégrateurs par liaison capacitive, et en ce qu'elle comporte des moyens pour restaurer ledit potentiel de base avant chaque mesure d'énergie pendant la fin d'une période durant laquelle les impulsions ont été absentes.

L'invention sera mieux comprise à la lecture de la description qui suit et à l'examen des figures qui l'accompagnent.

Sur ces figures les mêmes repères désignent les mêmes éléments. Ces figures représentent:

- fig. 1A, 1B, et 1C un schéma bloc d'une gamma-caméra munie du dispositif de restauration du potentiel de base selon l'invention,
- fig. 2, les moyens de restauration du potentiel de base selon l'invention et les moyens de commande de ces moyens de restauration,
- fig. 3, des particularités d'un circuit de synchronisation des moyens de restauration précédents,
- fig. 4, des diagrammes temporels des signaux intervenant dans la gamma-caméra de l'invention.

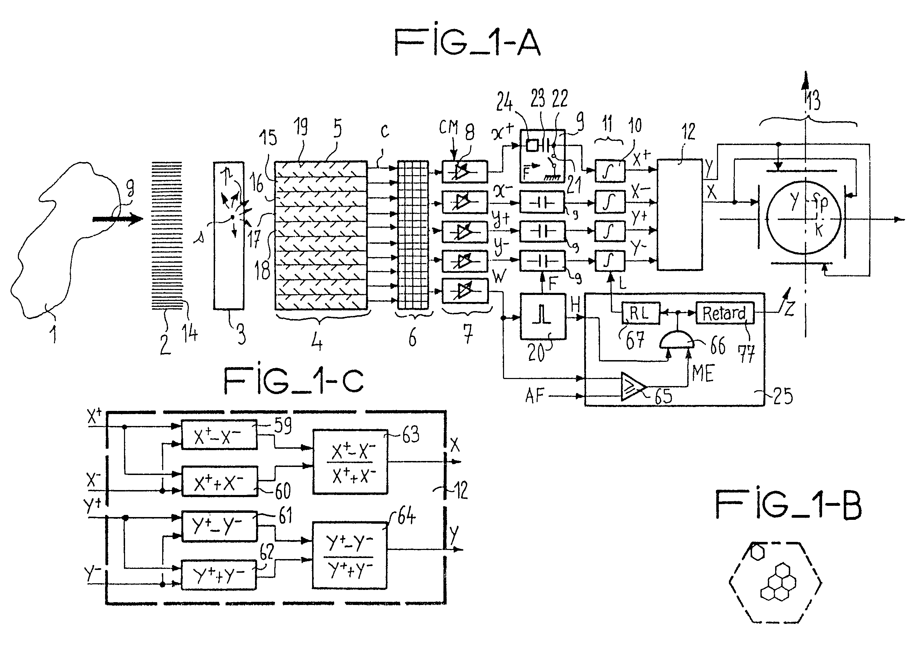

Sur la figure 1A on distingue le schéma bloc de la gamma-caméra de l'invention dans laquelle des rayons gamma g émis par un corps radioactif 1 sont focalisés par un collimateur 2 sur un scintillateur 3. Le rayonnement gamma g émis provoque une scintillation s dont les photons lumineux p viennent attaquer les photocathodes d'un réseau 4 de tubes photomultiplicateurs 5. Les contrictutions électriques c détectées par les tubes 5 sont introduites à l'entrée d'un jeu 6 de matrices de résistances. Le jeu 6 de matrices de résistances comporte ici cinq matrices délivrant simultanément et respectivement des impulsions pondérées nommées x+, x-, y+, y- et w. Ces impulsions pondérées sont remises en forme par un étage 7 d'amplificateurs à gains variables tels que 8. Ces impulsions pondérées sont alors couplées capacitivement chacune par un circuit de restauration de potentiel de base tel que 9 à l'intégrateur correspondant 10 de l'étage intégrateur 11 sauf la dernière w. Des impulsions de localisation, X+, X–, Y+, Y–, délivrées alors par l'étage 11, sont introduites dans un circuit de calcul 12 délivrant en sortie les signaux de coordonnées X et Y devant servir à la visualisation d'un point lumineux P sur l'écran d'un oscilloscope 13. La position du point P par rapport à l'axe d'abscisse et à l'axe d'ordonnée figurant sur cet écran est représentative de d'emplacement de la scintillation s sur le scintillateur 3 et donc de l'endroit d'émission du rayonnement gamma g dans le corps radioactif 1.

Dans un exemple, le collimateur 2 est une plaque en plomb, épaisse de plusieurs centimètres, percée d'une pluralité de trous 14, orientés perpendiculairement à sa surface pour ne laisser passer du rayonnement gamma incident que les photons se progageant perpendiculairement: à cette surface. Il est courant que le corps radioactif 1 émette selon sa nature des photons gamma d'énergies différentes, par exemple des photons gamma d'énergie 80 kev, 122 kev, et 160 kev. Le cristal 3, dans un exemple, est à base d'iodure de sodium activé au thallium comme évoqué précédemment. Les photons lumineux p viennent exciter la photocathode des tubes photomultiplicateurs 15, 16, 17, 18 qui sont disposés en regard de l'endroit où s'est produite la scintillation s. D'une manière préférée dans l'invention, les tubes photomultiplicateurs tels que 5 ont chacun une section hexagonale et sont accolés les uns aux autres pour former un réseau hexagonal visible en coupe sur la figure 1B. Dans un exemple, la surface développée par ce réseau à une dimension de l'ordre de 60 cm par 60 cm la médiane de chacun des tubes étant de l'ordre de 6 cm. Le nombre des tubes du réseau est alors de 61. Chacun des tubes photomultiplicateurs contient un ensemble de dynodes, telles que 19, pour amplifier les détections réalisées par ces tubes. Tous les tubes photomultiplicateurs du réseau sont réglés de telle manière qu'ils injectent une contribution c indentique dans le jeu de matrices 6 quant ils reçoivent sur leur photocathode la même énergie lumineuse.

Le jeu de matrices 6 comporte cinq matrices composées chacune d'un nombre indentique de résistances. Chaque résistance d'une matrice est reliée d'un côté à la sortie d'un tube photomultiplicateur et de l'autre côté à une borne commune qui constitue la sortie de la matrice. Dans l'exemple évoqué chacune des matrices comporte 61 résistances. Les matrices délivrant les signaux x+, x–, y+, et y–comportent des résistances dont la valeur est fonction de la position du tube. On détermine sur le cristal deux axes cartésiens de référence. Les résistances de la matrice délivrant l'impulsion pondérée x+ subissent alors une progression croissante fonction de l'abscisse du tube considéré. Les résistances de la matrice délivrant l'impulsion pondérée x- subissent une progression identique mais décroissante. Il en est de même pour les matrices délivrant les impulsions pondérées y+ et y– où la progression est croissante ou décroissante respectivement en fonction de l'ordonnée du tube photomultiplicateur considéré. Dans la cinquième matrice, délivrant l'impulsion pondérée w représentative de l'énergie de la scintillation, toutes les résistances sont pratiquement égales; elles sont ajus-tables en usine d'un photomultiplicateur à l'autre pour que la réponse en énergie soit la même dans chaque tube photomultiplicateur quelle que soit sa position sur le cristal. Après intégration dans les intégrateurs de l'étage intégrateur 11 les impulsions pondérées sont transformées en impulsions de localisation, X+, X–, Y+, et Y–. Les signaux électriques de coordonnés X et Y sont alors proportionnels respectivement aux valeurs (X+) – (X–) et (Y+) – (Y–).

Chacun des circuits 9 de restauration de potentiel de base interposés entre le 6 de matrices et l'étage 11 (on néglige dans la suite de cet exposé l'ensemble 7 des amplificateurs à gain variable 8) fonctionne de la manière qui va être étudiée maintenant. Lorsqu'une impulsion pondérée correspondant à une scintillation apparaît, en particulier sur la voie d'énergie w, elle est prise en compte par un circuit 20 de repérage de l'apparition de l'impulsion. Dès le début de cette impulsion pondérée le circuit 20 émet un ordre F appliqué à un relais 21 du circuit 9. Le relais 21 est une porte analogique rapide d'un type connu. Pendant toute la durée de présence de l'ordre F, qui est dite durée de restauration, le relais 21 est fermé et restaure un potentiel de base sur la borne 22 du condensateur 23 qui est raccordée à l'intégrateur 10. Cette restauration du potentiel de base est symbolisée sur la figure 1A par un raccordement à la masse. Comme l'impulsion pondérée x+ est introduite dans le circuit 9 par l'intermédiaire d'une ligne à retard 24 la transmission de l'impulsion x+ n'est pas affectée par ce forçage de potentiel. Lorsque l'ordre F cesse le relais 21 s'ouvre et, du fait des constantes de temps imposées par l'impédance d'entrée de l'intégrateur 10 conjuguée avec le condensateur 23, le potentiel de la borne 22 reste à la valeur imposée. Puis l'impulsion qui'était retardée dans la ligne 24 d'une durée R1 arrive sur le condensateur 23 qu'elle traverse naturellement pour venir s'appliquer à l'entrée de l'intégrateur 10. La durée de retard de la ligne à retard 24 est bien entendu supérieure ou égale à la durée de l'ordre F de restauration. Dans ces conditions la mesure par intégration des impulsions pondérées dans l'étage il se fait sans l'apport des composantes continues permanentes que l'on a ainsi éliminées.

Une autre manière de faire peut consister à interposer sur le chemin des impulsions pondérées un ensemble de portes analogiques commandées périodiquement pour ne laisser passer ces impulsions, si elles existent, qu'à des périodes cycliquement répétées et connues. Un circuit oscillant, non représenté mais facilement concevable, peut alors délivrer alternativement un ordre de fermeture de ces portes analogiques et un ordre F de restauration du potentiel de ligne de base. Dans ce deuxième procédé la présence de la ligne à retard 24 dans le circuit 9 est facultative. De ce deux manières de faire il résulte que dans l'invention on restaure le potentiel de base lors de l'absence d'une impulsion. Dans le premier cas l'absence de l'impulsion est déterminée par un circuit tel que 20 (puisqu'on détete précisément le début de son apparition pour déclencher le processus de restauration de potentiel de base), dans le deuxième cas l'absence de l'impulsion est provoquée.

Le circuit de repérage de l'apparition de l'impulsion est relié à un analyseur d'amplitude 25. Cet analyseur 25 a pour objet de mesurer la hauteur de l'impulsion pondérée d'énergie w et de ne délivrer un ordre logique L de commande d'intégration à l'étage 11 que quand l'amplitude de cette impulsion correspond à celle choisie par un ordre d'affichage AF. Cet analyseur 25 comporte essentiellement un jeu de comparateurs vérifiant que le maximum de l'impulsion pondérée w est comprise entre les deux valeurs extrêmes de la gamme affichée. L'ordre d'affichage AF est dépendant de la commande manuelle de gain CM des amplificateurs à gains variables 8. Si l'impulsion pondérée pour laquelle on vient de restaurer le potentiel de la ligne de base comprise dans la gamme affichée, l'ordre L valide le fonctionnement des intégrateurs de l'étage 11. Ces intégrateurs délivrent alors au bout d'une durée d'intégration choisie par avance les impulsions de localisation X+, X-, Y+, et Y-. Par ailleurs l'analyseur 25 délivre un ordre de validation Z des coordonnées également appliqué au dispositif de visualisation en particulier sur la commande de Wehnelt de l'oscilloscope 13.

Le circuit de calcul 12 des signaux de coordonnées X, et Y est représenté sur la figure 1C. Il comporte un jeu d'additionneurs 59 à 62 pour effectuer, en recevant sur leurs entrées les impulsions de localisation X+ et X- ou Y+ et Y-, respectivement les opérations suivantes: X+ − X- et X+ + X- ou Y+ − Y- et Y- + Y-. Les additionneurs 59 et 61 comportent un inverseur, non figuré, sur leur deuxième entrée pour effectuer des soustractions au lieu d'additions. La normalisation de X et Y est obtenue en raccordant respectivement les sorties des additionneurs 59 et 60 ou 61 et 62 et respectivement sur les deux entrées de deux diviseurs 63 et 64. Ces diviseurs sont, dans un exemple, des diviseurs analogiques rapides Analog Devices 429B. Une demande de brevet déposée le même jour par la demanderesse décrit ce circuit de calcul 12 qui effectue la normalisation des signaux de coordonnées pour les affranchir de l'énergie du signal reçu sans recevoir le signal W.

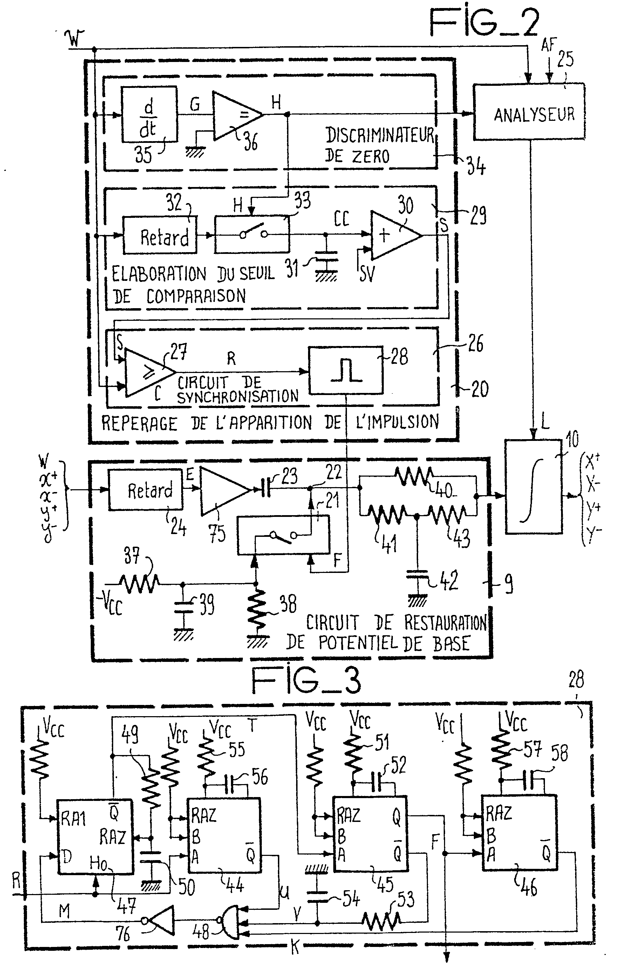

Sur la figure 2 on distingue en détail la réalisation d'un circuit 9 de restauration de potentiel de base et d'un circuit 20 de réperage de l'apparition de l'impulsion conforme à l'invention. Ces circuits sont reliés comme précédemment à l'analyseur d'amplitude 25 et à intégrateur 10. Les circuits de restauration de potentiel de base 9 sont identiques quelle que soit l'impulsion pondérée x+, x-, y+ et y- qu'il faille prendre en compte, ils sont réalisés en quatre exemplaires dans l'invention. Chacun d'eux comporte notamment une ligne à retard 24 en série avec un condensateur de liaison 23 dont la borne 22 est portée au potentiel de base pendant l'application d'un ordre F de restauration sur un relais 21. Les raisons de la présence des différents circuits CR dans le circuit 9 sont liées aux nécessités de corriger le potentiel de base à prendre en compte: celui-ci n'est donc pas nécessairement celui de la masse comme évoqué précédemment. Ces corrections ont cependant pour effet d'améliorer le résultat de la restauration qui aurait déjà été suffisant avec un raccordement direct à la masse. La présence de l'amplificateur 75 entre le condensateur 23 et la ligne à retard 24 à pour objet d'effectuer l'adaptation d'impédance de la sortie de la ligne à retard 24 et donc d'empêcher la réflexion des impulsions pondérées sur une impédance désadaptée. Cet amplificateur à pour effet secondaire de modifier le signe des impulsions pondérées ce qui est au demeurant peu important.

Ce circuit 20 de répérage de l'apparition de l'impulsion comporte essentiellement un circuit 26 de synchronisation dans lequel un comparateur 27, recevant sur ses bornes le signal w et un seuil de comparaison S, bascule et délivre un ordre R quand le signal w devient supérieur à S. De manière à connaître le plus exactement possible l'instant du début de l'impulsion w le seuil S est fixé au plus bas possible. Lors du basculement du comparateur 27 le signal R est introduit à l'entrée d'un circuit 28 délaboration de l'ordre F. Ce circuit 28 d'élaboration tel qu'il sera décrit plus amplement par la suite comporte essentiellement un jeu de bascules monostables pour imposer une durée déterminée de restauration à l'ordre F.

La solution consistant à retenir un seuil S constant n'est pas toujours la meilleure, en particulier parce que le signal w est entaché d'une composante continue dont la valeur dérive aléatoirement dans le temps. Aussi pour éviter des élaborations intempestives de l'ordre F on est amené à placer le seuil S à une valeur supérieure à la valeur maximale que peut atteindre cette composante continue. Ceci a alors pour effet de ne pas toujours déclencher l'ordre F exactement au moment de l'apparition de l'impulsion pondérée w, mais plutôt légèrement plus tard quant elle à atteint le seuil S indiqué. Dans une réalisation préférée de l'invention le suil S de comparaison est obtenue dans un circuit 29 délaboration de ce seuil dans lequel on additionne dans un additionneur 30 le seuil vrai à prendre en compte, SV, à la composante continue parasite CC de w.

La mesure de cette composante continue CC est obtenue en mesurant la valeur du signal w avant l'apparition de l'impulsion. Pour ce faire on charge, en dehors des périodes ou se produit l'impulsion pondérée w, un condensateur 31 branchée en parallèle sur l'entrée de l'additionneur 30 à la valeur de la composante continue CC. Ainsi le sigal S est alors la somme du signal SV et du signal CC et, lors de la comparaison dans le comparateur 27 de ce signal S avec l'impulsion w, l'interférence de cette composante continue CC sera neutralisée. Dans ces conditions le seuil vrai SV peut être réglé à une valeur aussi basse que désirée.

Pour mesurer la composante continue CC on prend en compte la valeur de w avant le moment de l'apparition de l'impulsion. Cette prise en compte est obtenue simplement en insérant entre le signal w et l'entrée correspondante de l'additionneur 30 une ligne à retard spécifique 32 en série avec un relais de déclenchement 33. Ce relais de déclenchement est également une porte analogique rapide. Le relais de déclenchement 33 est fermé, et donc assure la transmission de w vers l'additionneur 30, quand un circuit discriminateur de zéro 34, mesurant l'instant de passage du sommet de l'impulsion, envoie un ordre de déclenchement H signalant la présence de l'impulsion. Comme w est transmis au travers de la ligne à retard 32 la sortie de la ligne à retard 32 délivre à ce moment un niveau représentatif de la composante continue de l'impulsion w avant que celle-ci ne se produise. En considérant que le maximum de l'impulsion pondérée w se produit au bout d'une durée sensiblement constante après le début de cette impulsion il suffit tout simplement d'ajuster le retard de la ligne à retard spécifique 32 pour qu'il soit supérieur à cette durée.

La mesure de l'instant de passage du maximum de l'impulsion pondérée w par le discriminateur de zéro 34 s'effectue simplement en faisant passer cette impulsion w au travers d'un différenciateur, ou dérivateur 35 délivrant un signal G dérivé par rapport au temps de l'impulsion w. Lorsque ce signal de dérivée s'annule cela signifie que l'impulsion est à son maximum. Donc en comparant dans un comparateur 36 la valeur de ce signal à une valeur nulle on obtient lors du busculement de ce comparateur un signal H de déclenchement dont on se sert pour commander le relais 33. En fait, le comparateur 36 comporte une bascule monostable en sortie et le signal H est un signal impulsionnel dont la durée est suffisante pour permettre le chargement du condensateur 31 par la sortie de la ligne à retard 32. On remarquera qu'il aurait été possible de remplacer le discriminateur de zéro 34 par un circuit analogue au circuit 26 en modifiant en conséquence le retard apporté par la ligne à retard spécifique 32. En effet, dans ce cas comme dans le précédent ce qui est important c'est d'appliquer w à l'entrée du comparateur 30 quand il n'est que représentatif de la composante continue CC à éliminer.

Par contre, le signal de déclenchement H a également un autre intérêt. En effet, introduit sur une deuxième entrée de l'analyseur d'amplitude 25 il peut permettre à cet analyseur 25, pour une gamme d'énergie donnée (la gamma d'énergie la plus haute) de ne comporter qu'un comparateur mesurant le dépassement par l'impulsion w de la valeur inférieure de la gamme en cause. Quand ce signal de dépassement est immédiatement suivi par l'apparition du signal H ceci signifie que l'impulsion a culminé dans la gamme et donc que l'analyseur d'amplitude 25 peut élaborer l'ordre logique de commande d'intégration L. Pour ce faire l'analyseur 25 (figure 1A) comporte un comparateur 65 recevant sur ses entrées l'impulsion pondérée w et l'ordre d'affichage AF. Quand w devient supérieur à AF le comparateur bascule et transmet un ordre ME à l'entrée d'une porte ET 66. Lorsque le signal H est appliqué sur l'autre entrée de 66, la porte ET 66 bascule et délivre un ordre logique L de commande d'intégration appliqué à l'intégrateur de l'étage 11. En fait cet ordre L n'est transmis qu'après passage dans un circuit de retard 67 pour assurer une bonne synchronisation. De la même façon l'ordre de validation Z est obtenu en reliant la sortie de 66 à l'entrée d'un circuit de retard 77 assurant une bonne synchronisation de l'intégration et de la visualisation ultérieure du résultat de cette intégration. L'analyseur 25 peut comporter des circuits annexes pour tenir compte des différentes gammes d'énergie de la scintillation. Pour les gammes inférieures ou intermédiaires un autre comparateur (non figuré) mesurant le dépassement par l'impulsion w de la valeur supérieure de la gamme, invalide l'élaboration de l'ordre L en constatant que w a culminé hors de cette gamme.

Les caractéristiques technologiques des portes analogiques rapides 21 (telles que AH0015CD de National Semiconductor ou DG181BA de Siliconics), en particulier leur temps de réponse, leur résistance de conduction «Ron» non nulle, et les transferts de charges internes entre commande et signal à transmettre font que la restitution du potentiel de base s'effectue à un niveau très légèrement différent de zéro. Ce niveau apparaît sous la forme d'une nouvelle composante continue dépendant du taux de comptage. L'élimination de cette nouvelle composante continue s'obtient en soumettant la borne amont du relais 21 à un potentiel égal et de signe contraire à celui de cette nouvelle composante continue. Ce potentiel est imposé tout simplement par un pont diviseur résistif comportant les résistances 37 et 38 alimentées entre un potentiel $-V_{cc}$ et la masse. Dans une application où la hauteur des impulsions w est de l'ordre de 4 Volts, $V_{cc}$ est du même ordre, et le rapport des résistances 37 à 38 est calculé pour imposer un potentiel de négatif de quelques millivolts sur la borne amont du relais 21. Le cordensateur 39 en parallèle sur la résistance 38 sert à pallier l'appel de courant qui se produit lors de la fermeture du relais 21.

Cependant, le taux de comptage d'une gamma-caméra n'est pas constant. Il dépend de la radioactivité de l'isotope utilisé. Cette radioactivité fluctue autour d'une valeur nominale faisant ainsi évoluer le taux de comptage. Le circuit 37–39 est réglé pour la valeur nominale. Pour tenir compte de cette fluctuation, on introduit dans l'intégrateur 10 l'impulsion pondérée additionnée à un signal de correction tenant compte de cette fluctuation du taux de comptage. L'impulsion pondérée est introduite dans l'intégrateur 10 par l'intermédiaire de la résistance 40 alors que le signal de correction, disponible au point milieu d'un dipôle formé de la résistance 41 et de la capacité 42, est introduit dans l'intégrateur par la résistance 43. Hormis les pondérations effectuées respectivement par les résistances 40 et 43 sur chacun de ces signaux, on constate bien que c'est leur somme qui est appliquée à l'intégrateur 10. Ce signal de correction est obtenu tout simplement en intégrant l'impulsion pondérée dans le circuit passe-bas formé de la résistance 41 et du condensateur 42. La charge de ce dernier est donc fonction du taux de comptage. Les valeurs des composants passifs numérotées 37 à 42 sont réglées expérimentalement.

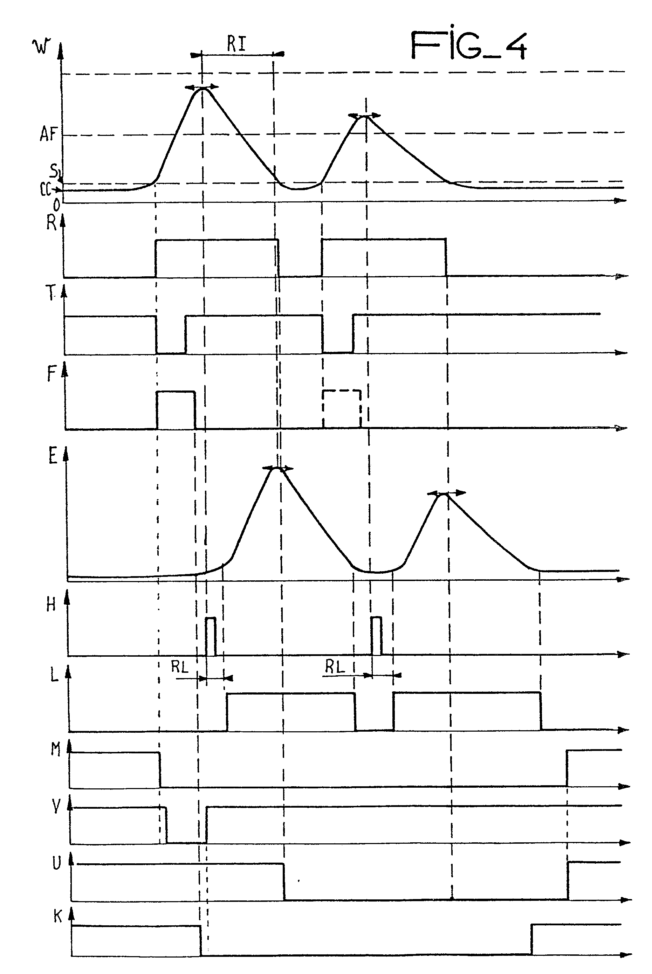

Le circuit 28 élaborant l'ordre de synchronisation F est examiné maintenant au regard de la figure 3 et des diagrammes temporels de la figure 4. Ce circuit reçoit le signal R en provenance du comparateur 27 du circuit de synchronisation 26. Il comporte essentiellement trois bascules monostables fonctionnant en régime asynchrone, les bascules 44, 45, 46, il comporte également une bascule de type D, la bascule 47. L'ordre F est délivré sur la sortie Q de la bascule 45. La bascule D 47 sert essentiellement à assurer le fonctionnement des bascules monostables 44 à 46. En effet, si le signal R a une durée trop courte le fonctionnement de ces dernières n'est pas idéal. Dans un exemple, ces bascules 44 à 46 sont respectivement du type 74123, 74221 et 74221 de TEXAS INSTRUMENT requérant pour leur excitation une impulsion dont la durée minimum est de l'ordre d'une cinquantaine de nanosecondes environ. La bascule D 47 est du type 7474 de TEXAS INSTRUMENT.

Les raccordements du circuit 28 sont les suivants: la bascule 44 est reliée par son entrée A à la sortie du comparateur 27; la sortie Q̄ de la bascule 44 est reliée à une première entrée d'une porte NAND à trois entrées 48; la sortie Q̄ de la bascule 47 est reliée à l'entrée A de la bascule 45; la sortie Q̄ de la bascule 45 est reliée par un circuit passe bas 53-54 sur la deuxième entrée de la porte 48; la sortie Q de la bascule 45 est reliée d'une part à l'entrée A de la bascule 46 et d'autre part à chacune des entrées de commande des relais 21 des circuits 9; la sortie Q̄ de la bascule 46 est reliée à la troisième entrée de la porte 48; la sortie de la porte 48 est reliée à l'entrée D de la bascule 47 par l'intermédiaire d'un inverseur 76; le point milieu du circuit RC, 49-50, est relié à l'entrée RAZ de la bascule 47; l'entrée RA1 de la bascule 47 est relié à la tension d'alimentation Vcc. Les autres raccordements de polarisation et de montage en monostable des bascules 44 à 46 ne sont pas décrits car ils sont triviaux.

Le bon fonctionnement du dispositif de restauration de potentiel de base nécessite d'appliquer l'ordre F à un instant où aucune impulsion pondérée n'est présente, c'est-à-dire, à un instant où seules les tensions continues de la chaîne de détection sont prises en compte. Si la commande de charge du condensateur 23 de liaison s'effectue à un instant où le signal est présent, la capacité acquiert une charge moyenne différente de la valeur moyenne des tensions continues et l'amplitude de l'impulsion suivante est faussée. Il en résulte un calcul de coordonnées erroné et une dégradation de la résolution spatiale. En conséquence, une première précaution consiste à empêcher le redéclenchement du signal F sur des signaux parasites et qui suivent l'impulsion pondérée d'énergie w. Une seconde précaution consiste à s'assurer, qu'avant le déclenchement, w était resté inférieur au seuil très bas SV suffisamment longtemps pour éviter de charger le condensateur 23 de liaison avec la fin d'une impulsion précédente, par exemple en cas d'empilement.

Ces deux précautions sont assurées par un ordre d'invalidation M introduit sur l'entrée D de la bascule D 47 pendant autant de temps que les rebonds parasites des impulsions pondérées viennent exciter le monostable 44 ou pendant une durée déterminée suffisamment longue imposée par le monostable 46. Ainsi, lorsqu'une impulsion pondérée a été prise en compte et a donné naissance à un ordre F le monostable 46 impose un ordre d'invalidation pendant une durée suffisamment longue, dans un exemple cette durée vaut 2300 nanosecondes. Cette durée est égale à celle qui résulterait d'un empilement dû à la succession d'une dizaine d'impulsions pondérées. Cette situation est retenue comme étant fortement improbable et il est donc tout à fait justifié de faire cesser l'invalidation au bout de cette durée. Par ailleurs, si des rebonds des impulsions pondérées se produisent d'une manière répétitive, la bascule monostable 44 contribue à l'élaboration de l'ordre d'invalidation M tant que ces rebonds existent. En effet, cette bascule 44 est d'un type redéclenchable ce qui signifie que l'impulsion négative qu'elle délivre, au lieu de remonter au bout d'une durée prédéterminée, ici 1800 nanosecondes, après la première excitation est conçue pour ne remonter qu'après cette même durée suivant la dernière excitation reçue. Pour simplifier, dans l'exemple, on peut considérer que si des rebonds se produisent pendant 600 nanosecondes, l'ordre d'invalidation, dû à la bascule monostable 44, durera 1800 nanosecondes + 600 nanosecondes = 2400 nanosecondes alors qu'il n'aurait duré que 2300 nanosecondes dues à la bascule monostable 46.

Le fonctionnement du circuit 28 est décrit maintenant en détail. La figure 4 montre un signal w culminant deux fois dans une gamme d'énergie considérée. Le signal R obtenu en sortie du comparateur 27 présente deux impulsions positives dont la position est déterminée par les instants de passage du signal w à la valeur S du seuil de comparaison. Le signal E est le signal w obtenu à la sortie de la ligne à retard 24, il est donc retardé par rapport à celui-ci d'une durée RI. L'ordre F de restauration du potentiel de base se déclenche sur le front montant du signal R et dure moins longtemps que le retard subi par le signal E.

Le signal H délivré par le discriminateur de zéro 34 se déclenche sur l'instant de passage du maximum de l'impulsion pondérée w. L'obtention du signal F est commandé par l'apparition du signal R mais elle pourrait être obtenue par l'apparition du signal H dans ce cas il conviendrait de modifier en conséquence le retard apporté par la ligne à retard 24 si le circuit logique 28 est maintenu tel quel. Dans ces conditions la ligne à retard 24 aurait une durée de retard supérieure et l'augmentation de durée serait de l'ordre de la durée de la demi-impulsion pondérée. Le signal H attaque l'analyseur d'amplitude 25 qui délivre alors avec un retard logique RL le signal logique L de commande d'intégration des intégrateurs de l'étage 11. On constate que cette intégration commence pratiquement avant l'application des impulsions pondérées sur les intégrateurs 10 et qu'elle se termine pratiquement après. La deuxième impulsion du signal F apparaît en pointillé parce qu'en fait elle est invalidée dans le circuit logique 28 de la manière suivante.

Avant l'application de la première impulsion R le circuit 28 est dans l'état suivant: le signal T à la sortie $\overline{Q}$ de la bascule 47 est à l'état 1, le signal U à la sortie $\overline{Q}$ de la bascule 44 est à l'état 1, de même que les signaux V et K aux sorties $Q$ respectivement des bascules 45 et 46. En conséquence, le signal de sortie de la porte NAND 48 est à l'état zéro, et le signal M en sortie de l'inverseur 76 est à l'état 1. Lors de l'application du front de montée du signal R sur l'entrée d'horloge Ho de la bascule 47, le signal T retombe à zéro pendant une durée dépendant de la constante de temps du circuit RC respectivement 49 et 50. Lorsque le point milieu de ce circuit RC atteint zéro, il déclenche la remise à zéro RAZ de la bascule 47 dont la sortie $\overline{Q}$ remonte à l'état 1. Dans un exemple la durée de l'impulsion négative T est de l'ordre de 220 nanosecondes. Dès son élaboration cette impulsion T est appliquée sur l'entrée A de la bascule 45. Son front de descente déclenche le basculement des sorties $Q$ et $\overline{Q}$ de cette bascule. La sortie $\overline{Q}$ passe alors de l'état zéro à l'état 1 pendant une durée dépendant de la constante de temps du circuit RC 51 et 52. L'ordre F est ainsi élaboré pendant cette durée. Dans un exemple cette durée est de l'ordre de 440 nanosecondes et le retard RI imposé par le ligne 24 est de l'ordre de 680 nanosecondes. Pendant ce même temps la sortie $\overline{Q}$ de la bascule 45 passe à l'état zéro et en conséquence le signal V passe à l'état zéro mais légèrement plus tard du fait de la présence du circuit RC retardateur respectivement 53, 54. Ce signal V dure la même durée que le signal F. Dès l'application du front de descente du signal R sur l'entrée A de la bascule 44 la sortie $\overline{Q}$ de cette bascule passe de l'état 1 à l'état zéro, le signal U qui fait changer le signal M impose donc un état zéro à l'entrée D de la bascule 47. En conséquence, lors de la prochaine impulsion du signal R premièrement le signal T ne change pas d'état car il continue à être imposé à 1 et deuxièmement le signal U reste à zéro mais pour une période initialisée sur l'arrivée de cette deuxième impulsion du signal R. En conséquence, le signal F n'est pas à nouveau élaboré entre les deux impulsions pondérées w car elles sont trop proches dans le temps l'une de l'autre. Si cet effet n'avait pas joué c'est le front arrière de F appliquée sur l'entrée A de la bascule 46 qui aurait provoqué le passage à l'état zéro du signal K disponible à la sortie $\overline{Q}$ de cette bascule. Ce signal K aurait alors invalidé pendant une durée, dans l'exemple de 2300 nanosecondes, l'entrée D de la bascule 47 en faisant basculer à zéro le signal M.

Si aucune impulsion n'arrive plus du comparateur 27 et si donc R reste constamment égal à zéro, du fait de leur constante de temps les bascules 44 à 46 imposent à terme aux signaux U, V et K de remonter à 1 et donc au signal M remonter à 1. Dans cet état le circuit 28 est à nouveau disponible pour permettre l'élaboration d'un ordre F sur le premier front de montée du signal R qui va venir. Les durées des impulsions U et K délivrées par les bascules 44 et 46 sont déterminées respectivement par les circuits RC 55, 56 et 57, 58 reliés aux bornes de ces bascules. D'une manière connue ces circuits sont reliés à la tension continue VCC d'alimentation du circuit. Il en est de même de l'entrée remise à 1 RA1 et des entrées remises à zéro RAZ respectivement des bascules 47, 44, 45 et 46. La raison du retard introduit dans le circuit RC 53, 54 est lié à la nécessité d'assurer un bon recouvrement des impulsions U et K à l'entrée du circuit NAND 48.

Avec une gamma-caméra comportant le dispositif de restauration de ligne de base qui vient d'être décrit on obtient, pour des taux de comptage supérieurs à 200.000 évènements par seconde, une résolution spatiale inférieure à 0,4 centimètre mesurée sur le plan du scintillateur.

## Revendications

1. Procédé de traitement des impulsions (w, x+, x–, y+, y–) délivrées par une gamma-caméra dans laquelle
– des scintillations (s) produites sous l'effet d'un rayonnement gamma (9) dans un cristal (3) scintillateur sont détectées et amplifiées par un réseau (4) de tubes (5) photomultiplicateurs,
– puis pondérées dans des matrices de résistances pour produire lesdites impulsions
– et dont la mesure est obtenue par intégration (11) par rapport à un potentiel de base,
– caractérisé en ce que lesdites impulsions sont transmises par liaison capacitive, en ce que l'on n'autorise (F) cette mesure qu'après la fin d'une période où il y a eu absence d'impulsion, et en ce que l'on restaure le potentiel de base avant une nouvelle intégration pendant la fin de cette dite période.

2. Procédé selon la revendication 1 caractérisé en ce que l'on provoque l'absence des impulsions par coupure de la chaîne scintillation-détection-amplification-pondération pendant des périodes arrivant à des instants déterminés choisis par avance et en ce que l'on restaure le potentiel de base pendant ces périodes.

3. Procédé selon la revendication 1 caractérisé
– en ce que l'on repère (R) la fin de la période d'absence d'impulsion par comparaison (27) desdites impulsions à un seuil (S) de comparaison,
– en ce que l'on restaure alors le potentiel de base,
– et en ce que l'on effectue ensuite la mesure de ces impulsions après les avoir retardées (24) d'une durée supérieure ou égale à la durée de restauration.

4. Gamma-caméra pour la mise en œuvre du procédé selon la revendication 1, munie d'un dispositif de traitement des impulsions comportant, un collimateur (2) pour collimater sur un cristal (3) scintillateur un rayonnement gamma (g) à mesurer, un réseau (4) de tubes (5) photomultiplicateurs pour détecter les scintillations (p) émises par le scintillateur (3) et pour amplifier les contributions (c) électriques résultant de cette détection, un jeu (6) de matrices de résistances pour pondérer et sommer les contributions électriques et produire ainsi des impulsions pondérées (x+, x–, y+, y–, w), et un étage (11) d'intégrateurs (10) pour mesurer par rapport à un potentiel de base les impulsions pondérées, caractérisée en ce que les impulsions pondérées sont appliquées aux dits intégrateurs par liaison capacitive (23), et en ce que la caméra comporte des moyens (9, 20) pour restaurer ledit potentiel de base avant chaque mesure d'énergie pendant la fin d'une période durant laquelle les impulsions ont été absentes.

5. Gamma-caméra selon la revendication 4 caractérisée en ce que les moyens (9) de restauration comportent chacun un jeu de dipoles composés d'une ligne à retard (24) et d'un condensateur (23) placée en série avec la ligne à retard (24), ces dipoles étant insérés chacun entre une matrice de résistance et l'intégrateur (10) correspondant, la borne (22) du condensateur (23) reliée à l'intégrateur étant portée au potentiel de base sous l'effet d'un relais (21) de synchronisation, commandé par des moyens (20) de repérage de l'apparition de l'impulsion et la durée du retard imposé par ladite ligne à retard (24) étant sensiblement supérieur ou égal à la durée de restauration de ce potentiel de base.

6. Gamma-caméra selon la revendication 5 caractérisée en ce que les moyens de repérage de l'apparition de l'impulsion comportent, dans un circuit (26) de synchronisation, un comparateur (27) recevant sur ses entrées des impulsions pondérées et un seuil (S) de comparaison et délivrant un signal logique (F) pour commander le relais (21) de synchronisation lorsque les impulsions pondérées dépassent ce seuil de comparaison.

7. Gamma-caméra selon la revendication 6 caractérisée en ce qu'elle comporte des moyens (29, 34) pour que le seuil de comparaison soit la somme d'un seuil de comparaison dit vrai (SV) et de la composante continue parasite (CC) affectant l'impulsion pondérée (w) qui est appliquée sur le comparateur (27) du circuit de synchronisation.

8. Gamma-caméra selon la revendication 6 ou la revendication 7 caractérisée en ce que les moyens de repérage de l'apparition de l'impulsion comportent un circuit (34) discriminateur de zéro pour recevoir des impulsions pondérées (w), pour délivrer un signal (H) de déclenchement quand une impulsion pondérée est à son maximum et pour actionner ainsi à cet instant un circuit (29) d'élaboration du seuil de comparaison comportant un relais (33) de déclenchement, interposé entre une ligne (32) à retard spécifique recevant les impulsions pondérées et une des entrées d'un additionneur (30) recevant en outre une tension continue (SV) représentative du seuil vrai à prendre en compte et dont la sortie délivre le seuil de comparaison introduit dans le circuit (26) de synchronisation.

9. Gamma-caméra selon la revendication 8 caractérisée en ce que le retard imposé par la ligne à retard (32) spécifique est sensiblement supérieur à la moitié de la durée des impulsions à mesurer.

10. Gamma-caméra selon la revendication 8 ou la revendication 9 caractérisée en ce que le circuit discriminateur de zéro comporte un dérivateur (35) pour délivrer un signal (G) représentatif de la dérivée des variations de l'impulsion par rapport au temps et est raccordé à un comparateur à seuil (36) pour élaborer le signal (H) de déclenchement lorsque ce signal de dérivée s'annule.

11. Gamma-caméra selon l'une quelconque des revendications 4 à 10 caractérisée en ce qu'elle comporte des moyens (37, 38, 39) pour ajuster le potentiel de base en fonction du taux de comptage de la gamma-caméra.

12. Gamma-caméra selon l'une quelconque des revendications 4 à 11 caractérisée en ce qu'elle comporte des moyens (40 à 43) pour ajuster le potentiel de base en fonction des variations du taux de comptage de la gamma-caméra.

13. Gamma-caméra selon l'une quelconque des revendications 4 à 12 dans laquelle le jeu (6) de matrices de résistances délivre simultanément quatre impulsions pondérées (x+, x–, y+, y–) pour permettre de localiser la position sur le scintillateur (3) de la scintillation émise, et une impulsion pondérée (w) représentative de l'énergie de cette scintillation caractérisée en ce que cette impulsion d'énergie est celle qui est introduite dans le circuit (20) de repérage de l'apparition des impulsions.

14. Gamma-caméra selon l'une quelconque des revendications 4 à 13 caractérisée en ce qu'elle comporte des moyens (44) pour interdire temporairement une nouvelle mesure de l'énergie des impulsions dans l'étage intégrateur (11) après chaque mesure effectuée.

15. Gamma-caméra selon la revendication 14 caractérisée en ce qu'elle comporte des moyens (46) pour ajuster la durée d'interdiction de la nouvelle mesure de l'énergie des impulsions en fonction de l'activité du scintillateur (3).

**Patentansprüche**

1. Verfahren zur Verarbeitung von Impulsen (w, x+, x–, y+, y–), die von einer Gammastrahlungs-Kamera abgegeben werden, worin
- die unter der Wirkung einer Gammastrahlung (9) in einem Szintillatorkristall (3) erzeugten Szintillationserscheinungen (s) erfasst und durch eine Gruppierung (4) von Photonenverstärkerröhren (5) verstärkt werden,
- anschliessend in Widerstandsmatrizen gewichtet werden, um die genannten Impulse zu erzeugen,
- und ihre Messung durch Integration (11) in bezug auf ein Basispotential erfolgt,
- dadurch gekennzeichnet, dass diese Impulse über eine kapazitive Verbindung übertragen werden, dass diese Messung (F) erst am Ende einer Zeitspanne freigegeben wird, in welcher keine Impulse aufgetreten sind, und dass das Basispotential vor einer erneuten Integration während des Endes dieser Zeitspanne wiederhergestellt wird.

2. Verfahren nach Anspruch 1, dadurch gekennzeichnet, dass das Ausbleiben von Impulsen hervorgerufen wird, indem die Szintillations-Detektions-Verstärkungs-Wichtungs-Kette während Zeitspannen unterbrochen wird, die zu vorbestimmten, im voraus ausgewählten Zeitpunkten auftreten, und dass während dieser Zeitspannen das Basispotential wiederhergestellt wird.

3. Verfahren nach Anspruch 1, dadurch gekennzeichnet,
- dass das Ende (R) der Zeitspanne des Ausbleibens von Impulsen durch Vergleichen (27) dieser Impulse mit einem Vergleichsschwellwert (S) ausfindig gemacht wird,
- dass dann das Basispotential wiederhergestellt wird,
- und dass anschliessend die Messung dieser Impulse erfolgt, nachdem sie um eine Dauer verzögert wurden (24), die gleich der Wiederherstellungsdauer oder grösser als diese ist.

4. Gammastrahlungs-Kamera zur Durchführung des Verfahrens nach Anspruch 1, mit einer Impulsverarbeitungsvorrichtung, die versehen ist mit einem Kollimator (2) zum Kollimieren der zu messenden Gammastrahlung (g) auf einem Szintillatorkristall (3), einer Gruppierung (4) von Photonenverstärkerröhren (5) zur Erfassung der vom Szintillator (3) ausgesendeten Szintillationserscheinungen (p) und zur Verstärkung der aus dieser Detektion herrührenden elektrischen Beiträge (c), einem Satz (6) von Widerstandsmatrizen zur Wichtung und Summierung der elektrischen Beiträge, um so gewichtete Impulse (x+, x-, y+, y-, w) zu erzeugen, und mit einer Stufe (11) von Integratoren (10) zur Messung der gewichteten Impulse in bezug auf ein Basispotential, dadurch gekennzeichnet, dass die gewichteten Impulse an die Integratoren über kapazitive Kopplung (23) angelegt sind und dass die Kamera Mittel (9, 20) aufweist, um das Basispotential vor jeder Energiemessung während des Endes einer Zeitspanne, während welcher die Impulse ausgeblieben sind, wiederherzustellen.

5. Gammastrahlungs-Kamera nach Anspruch 4, dadurch gekennzeichnet, dass die Wiederherstellungsmittel (9) jeweils einen Satz Zweipole umfassen, die jeweils aus einer Verzögerungsleitung (24) und einem in Reihe mit der Verzögerungsleitung (24) geschalteten Kondensator (23) zusammengesetzt sind, wobei diese Zweipole jeweils zwischen eine Widerstandsmatrix und den entsprechenden Integrator (10) eingefügt sind, wobei ferner der mit dem Integrator verbundene Anschluss (22) des Kondensators (23) auf das Basispotential unter der Wirkung eines Synchronisationsrelais (21) gelegt wird, welches durch Mittel (20) gesteuert wird, die das Erscheinen des Impulses aufspüren, und dass die Dauer der durch die Verzögerungsleitung (24) verursachten Verzögerung im wesentlichen gleich der Dauer für die Wiederherstellung dieses Basispotentials oder grösser als diese ist.

6. Gammastrahlungs-Kamera nach Anspruch 5, dadurch gekennzeichnet, dass die Mittel zum Aufspüren des Auftretens eines Impulses in einer Synchronisationsschaltung (26) einen Komparator (27) enthalten, welcher an seinen Eingängen gewichtete Impulse und einen Vergleichsschwellwert (S) empfängt und ein logisches Signal (F) abgibt, um das Synchronisationsrelais (21) zu steuern, wenn die gewichteten Impulse diesen Vergleichsschwellwert überschreiten.

7. Gammastrahlungs-Kamera nach Anspruch 6, dadurch gekennzeichnet, dass sie Mittel (29, 34) enthält, damit der Vergleichsschwellwert die Summe eines sogenannten wahren Vergleichsschwellwerts (SV) und der störenden Gleichkomponente (CC) ist, mit welcher der gewichtete Impuls (w) behaftet ist, der an den Komparator (27) der Synchronisationsschaltung angelegt wird.

8. Gammastrahlungs-Kamera nach Anspruch 6 oder Anspruch 7, dadurch gekennzeichnet, dass die Mittel zum Aufspüren des Erscheinens des Impulses eine Null-Diskriminatorschaltung (34) umfassen, um gewichtete Impulse (w) zu empfangen, um ein Auslösesignal (H) abzugeben, wenn ein gewichteter Impuls sich auf seinem Maximum befindet, und um so zu diesem Zeitpunkt eine Schaltung (29) für die Erzeugung des Vergleichsschwellwertes zu aktivieren, welche ein Auslöserelais (33) enthält, das zwischen eine spezifische Verzögerungsleitung (32), welche die gewichteten Impulse empfängt, und einen der Eingänge eines Addierers (30) eingefügt ist, der ferner eine Gleichspannung (SV) empfängt, die für den zu berücksichtigenden wahren Schwellwert repräsentativ ist, und dessen Ausgang den Vergleichsschwellwert abgibt, der in die Synchronisationsschaltung (26) eingegeben wird.

9. Gammastrahlungs-Kamera nach Anspruch 8, dadurch gekennzeichnet, dass die durch die spezifische Verzögerungsleitung (32) gegebene Verzögerung deutlich grösser als die Hälfte der Dauer der zu messenden Impulse ist.

10. Gammastrahlungs-Kamera nach Anspruch 8 oder Anspruch 9, dadurch gekennzeichnet, dass die Null-Diskriminatorschaltung einen Differenzierer (35) enthält, um ein Signal (G) abzugeben, welches repräsentativ für die Ableitung der Impulsänderungen nach der Zeit ist, angeschlossen an einen Schwellwertkomparator (36) zur Erzeugung des Auslösesignals (H), wenn dieses Ableitungssignal verschwindet.

11. Gammastrahlungs-Kamera nach einem der Ansprüche 4 bis 10, dadurch gekennzeichnet, dass sie Mittel (37, 38, 39) enthält, um das Basispotential in Abhängigkeit von dem Zählwert der Gammastrahlungs-Kamera einzustellen.

12. Gammastrahlungs-Kamera nach einem der Ansprüche 4 bis 11, dadurch gekennzeichnet, dass sie Mittel (40 bis 43) enthält, um das Basispotential in Abhängigkeit von den Änderungen des Zählwertes der Gammastrahlungs-Kamera einzustellen.

13. Gammastrahlungs-Kamera nach einem der Ansprüche 4 bis 12, worin der Satz (6) von Widerstandsmatrizen gleichzeitig vier gewichtete Impulse (x+, x−, y+, y−) abgibt, damit die Position der ausgesendeten Szintillationserscheinung auf dem Szintillator (3) lokalisiert werden kann, und gleichfalls ein gewichteter Impuls (w), welcher repräsentativ für die Energie dieser Szintillationserscheinung ist, dadurch gekennzeichnet, dass dieser Energieimpuls derjenige ist, welcher in die Schaltung (20) zum Aufspüren des Erscheinens von Impulsen eingegeben wird.

14. Gammastrahlungs-Kamera nach einem der Ansprüche 4 bis 13, dadurch gekennzeichnet, dass sie Mittel (44) enthält, um vorübergehend eine neue Messung der Impulsenergie in der Integratorstufe (11) nach jeder durchgeführten Messung zu verhindern.

15. Gammastrahlungs-Kamera nach Anspruch 14, dadurch gekennzeichnet, dass sie Mittel (46) enthält, um die Dauer der Sperrung einer erneuten Impulsenergiemessung in Abhängigkeit von der Aktivität des Szintillators (3) einzustellen.

**Claims**

1. Method of processing pulses (w, x+, x−, y+, y−) supplied by a gamma camera, wherein
– scintillations (s) produced under the action of a gamma radiation (9) in a scintillation crystal (3) are detected and amplified by an array (4) of photomultiplier tubes (5),
– subsequently weighted in resistive matrices to produce said pulses,
– and the measurement of which is obtained by integration (11) with respect to a base potential,
– characterized in that said pulses are transmitted by a capacitive connection, in that this measurement (F) is allowed only after the end of a period wherein no pulses occured and in that the base potential is restored prior to a new integration during the end of this period.

2. Method according to claim 1, characterized in that the absence of pulses is caused by interrupting the scintillation-detection-amplification weighting chain during periods arriving at determined moments selected in advance, and in that the base potential is restored during these periods.

2. Method according to claim 1, characterized in
– that the end (R) of the period of pulse absence is ascertained by comparing (27) said pulses to a comparing threshold (S),
– that the base potential is then restored,
– and that subsequently the measurement of these pulses is performed after having delayed them (24) by a duration equal to or exceeding the duration of restoration.

4. Gamma camera for performing the method according to claim 1, provided with a pulse processing device comprising a collimator (2) for collimating a gamma radiation (g) to be measured on a scintillation crystal (3), an array (4) of photomultiplier tubes (5) for detecting the scintillations (p) emitted by a scintillator (3) and for amplyfying the electric contributions (c) resulting from this detection, a set (6) of resistive matrices for weighting and summing the electric contributions and thus producing weighted pulses (x+, x−, y+, y−, w), and a stage (11) of integrators (10) for measuring the weighted pulses with respect to a base potential, characterized in that the weighted pulses are applied to said integrators by a capacitive connection (23), and in that the camera comprises means (9, 20) for restoring said base potential prior to each energy measurement during the end of a period wherein the pulses were absent.

5. Gamma camera according to claim 4, characterized in that the restoration means (9) each comprise a set of two-poles composed of a delay line (24) and a capacitor (23) connected in series with the delay line (24), these two-poles being each inserted between a resistive matrix and the corresponding integrator (10), the terminal (22) of the capacitor (23) connected to the integrator being connected to the base potential under the action of a synchronization relay (21), controlled by means (20) detecting the appearance of the pulse, and the duration of the delay imposed by said delay line (24) being substantially greater than or equal to the duration of restoration of this base potential.

6. Gamma camera according to claim 5, characterized in that the means for detecting the appearance of a pulse comprise, in a synchronization circuit (26), a comparator (27) receiving on its inputs weighted pulses and a comparison threshold (S) and supplying a logic signal (F) to control the synchronization relay (21) when the weighted pulses exceed this comparison threshold.

7. Gamma camera according to claim 6 characterized in that it comprises means (29, 34) causing the comparison threshold to be the sum of what is called a true comparison threshold (SV) and the direct parasitic component (CC) affecting the weighted pulse (w) which is applied to the comparator (27) of the synchronization circuit.

8. Gamma camera according to claim 6 or claim 7, characterized in that the means for detecting the pulse appearance comprise a zero discriminator circuit (34) for receiving weighted pulses (w) to supply a trigger signal (H) when a weighted pulse is at its maximum and for thus ac-

**0 130 095**

tuacting at this moment a circuit (29) for generating the comparison threshold comprising a triggering relay (33) interposed between a specific delay line (32) receiving the weighted pulses and one of the inputs of an adder (30) which further receives a direct voltage (SV) representative of the true threshold to be taken into consideration, and the output of which supplies the comparison threshold introduced into the synchronization circuit (26).

9. Gamma camera according to claim 8, characterized in that the delay imposed by the specific delay line (32) is substantially greater than one half of the duration of the pulses to be measured.

10. Gamma camera according to claim 8 or claim 9, characterized in that the zero discriminator circuit comprises a differentiator (35) for supplying a signal (G) representative of the derivative of the pulse variations with respect to time and is connected to a threshold comparator (36) for generating the trigger signal (H) when this derivative signal vanishes.

11. Gamma camera according to any of claims 4 to 10, characterized in that it comprises means (37, 38, 39) for adjusting the base potential in function of the count of the gamma camera.

12. Gamma camera according to any of claims 4 to 11, characterized in that it comprises means (40 to 43) for adjusting the base potential in function of variations of the count of the gamma camera.

13. Gamma camera according to any of claims 4 to 12, wherein the set (6) of resistive matrices simultaneously supplies four weighted pulses (x+, x-, y+, y-) to permit the localization of the emitted scintillation position on the scintillator (3) and a weighted pulse (w) representative of the energy of this scintillation, characterized in that this energy pulse is that which is introduced into the curcuit (20) for detecting the pulse appearance.

14. Gamma camera according to any of claims 4 to 13, characterized in that it comprises means (44) for temporarily disabling a new measurement of the pulse energy within the integrator stage (11) after each performed measurement.

15. Gamma camera according to claim 14, characterized in that it comprises means (46) for adjusting the disabling duration of the new pulse energy measurement in function of the activity of the scintillator (3).

FIG_1-A

FIG_1-C

FIG_1-B

0 130 095

# FIG_2

ANALYSEUR 25

DISCRIMINATEUR DE ZERO 34

ELABORATION DU SEUIL DE COMPARAISON 29

REPERAGE DE L'APPARITION DE L'IMPULSION 26 20

CIRCUIT DE SYNCHRONISATION 27 28

CIRCUIT DE RESTAURATION DE POTENTIEL DE BASE 9

# FIG_3

28

FIG_4